Europäisches Patentamt

European Patent Office

Office européen des brevets

(19)

(11) Veröffentlichungsnummer: **0 087 500**
**B1**

(12) **EUROPÄISCHE PATENTSCHRIFT**

(45) Veröffentlichungstag der Patentschrift:
08.05.85

(21) Anmeldenummer: **82109733.4**

(22) Anmeldetag: **21.10.82**

(51) Int. Cl.⁴: **F 16 L 1/00,** F 24 D 19/02,
B 21 C 47/18, B 65 H 49/30,
A 01 K 97/00, H 02 G 1/18

(54) Verlegevorrichtung für ein flexibles Fussboden-Heizungsrohr.

(30) Priorität: 01.03.82 DE 8205615 U

(43) Veröffentlichungstag der Anmeldung:
07.09.83 Patentblatt 83/36

(45) Bekanntmachung des Hinweises auf die Patenterteilung:
08.05.85 Patentblatt 85/19

(84) Benannte Vertragsstaaten:
AT BE CH DE FR GB IT LI LU NL SE

(56) Entgegenhaltungen:
DE - A - 2 107 986
DE - A - 2 854 194
DE - C - 275 561
DE - C - 445 491
US - A - 3 605 314

(73) Patentinhaber: Gebrüder Kömmerling Kunststoffwerke GmbH, Zweibrückerstrasse 200, D-6780 Pirmasens (DE)

(72) Erfinder: Schindeldecker, Klaus, Westring 11, D-6780 Pirmasens (DE)

(74) Vertreter: Berg, Wilhelm, Dr. et al, Patentanwälte Dr. Berg Dipl.-Ing. Stapf Dipl.-Ing. Schwabe Dr. Dr. Sandmair Postfach 86 02 45 Stuntzstrasse 16, D-8000 München 86 (DE)

**Beschreibung**

Die Erfindung betrifft eine Vorrichtung zum Aufnehmen eines zum Ring aufgewickelten Heizrohrstranges für eine Fußbodenheizung während der Verlegung derselben, gemäß dem Oberbegriff des Anspruchs 1.

Derartige Vorrichtungen weisen einen Haspelträger auf, an welchem eine Haspel zur Aufnahme des Rohrringes drehbar gelagert ist.

Ein derartiger Haspelträger ist tragbar oder fahrbar ausgebildet und wird auf dem Boden aufgestellt, auf welchem auch das flexible, normalerweise aus Kunststoff bestehende Heizrohr verlegt werden soll. Hierbei muß der Haspelträger eine verhältnismäßig breite Abstützfläche aufweisen, um zu verhindern, daß während des Abziehens des flexiblen Rohres von der Haspel der gesamte Haspelträger umfällt. Aus dem gleichen Grund muß der Haspelträger beim Fortgang der Verlegearbeiten stets derart neu aufgestellt werden, daß das Rohr gerade von der Haspel abgezogen wird, da ein schräges Abziehen die Kippfestigkeit des Haspelträgers trotz der obengenannten, stabilen Bauausführung übersteigen würde.

Die bekannte Vorrichtung hat nicht nur den Nachteil, daß sie stets umgesetzt werden muß, was wegen ihres erforderlichen Gewichtes beschwerlich ist, sondern die Vorrichtung behindert auch die Bewegungsfreiheit des Montagepersonals in dem Raum, in welchem gerade die Fußbodenheizung verlegt werden soll oder anderweitige Bauarbeiten durchgeführt werden sollen.

Ausgehend von diesem Stand der Technik liegt der Erfindung die Aufgabe zugrunde, die eingangs genannte Vorrichtung dahingehend weiterzubilden, daß sie ein bequemes und ungestörtes Verlegen erlaubt, ohne andere Arbeiten zu behindern.

Diese Aufgabe wird erfindungsgemäß durch die im kennzeichnenden Teil des Anspruchs 1 genannten Merkmale gelöst.

Das Befestigen von Vorrichtungen mittels einer Spannvorrichtung ist an sich bekannt (DE-C-275 561 und US-A-3 605 314).

Die erfindungsgemäße Verlegevorrichtung hat gegenüber den bereits bekannten Vorrichtungen den Vorteil, daß der Haspelträger nicht innerhalb des Raumes aufgestellt wird, in welchem eine Fußbodenheizung verlegt werden soll, sondern am Rand dieses Raumes in einer Tür- oder Fensteröffnung festgespannt wird. Deshalb kann der Haspelträger äußerst leicht und klein ausgebildet werden, da er nicht aufgrund seines Eigengewichtes und seiner Abmessungen für die erforderliche Kippsicherheit sorgen muß. Die feste Einspannung ermöglicht auch das schräge Abziehen des Rohres von der Haspel, so daß es nicht erforderlich ist, mit dem Haspelträger den jeweiligen Verlegearbeiten zu folgen. Es ist ganz im Gegenteil von Vorteil, wenn zwischen dem jeweiligen Verlegeort und der Vorrichtung eine gewisse Entfernung vorliegt, da dann das unvermeidliche Verwinden und Verdrehen des Heizungsrohres sich nicht mehr auf das bereits gelegte Heizungsrohr auswirkt, sondern in dem die genannte Entfernung überbrückenden Rohrabschnitt aufgenommen wird.

Ferner hat die erfindungsgemäße Verlegevorrichtung den Vorteil, daß sie durch Verspannen in einer Tür- oder Fensterlaibung in einer Höhe plaziert werden kann, die ein Abrollen des Rohrbundes ohne Berührung der Bodenfläche durch den Rohrstrang gestattet und somit das vorzugsweise aus Kunststoff bestehende Heizrohr vor Beschädigungen, z. B. durch mechanischen Abrieb, schützt.

Die Spannvorrichtung und insbesondere der Haspelträger können derart ausgebildet sein, daß die Anbringung der Haspel derart erfolgt, daß ein Durchgang durch die Türöffnung, an deren Laibung die Vorrichtung angebracht ist, nur so weit versperrt wird, daß der Durchgang nicht wesentlich behindert ist. Ferner liegt die durch die Vorrichtung unvermeidlicherweise gebildete Behinderung nur im Durchgang zwischen zwei Räumen, nicht aber in einem dieser Räume selbst vor, so daß in den Räumen stattfindende Arbeiten nicht durch die Anwesenheit der Vorrichtung behindert werden.

Die Spannvorrichtung kann beispielsweise als verstellbare Hebel-Spanneinrichtung ausgebildet sein, um ein besonders rasches Anbringen und Entfernen der Vorrichtung zu ermöglichen. Gemäß einer Ausgestaltung der Erfindung ist die Spannvorrichtung jedoch als Schraubenzwinge ausgebildet, welche am Haspelträger angebracht ist. Die Anbringung kann fest oder gelenkig erfolgen. Die feste Verbindung von Spannzwinge und Haspelträger hat den Vorteil des einfachen und stabilen Aufbaus, während die gelenkige Verbindung zwar kompliziert ist, aber den Vorteil erbringt, daß der Haspelträger nachträglich noch ausgerichtet werden kann, wenn die Spannzwinge bereits an der Türlaibung befestigt ist.

Die Spannzwinge weist vorteilhaft in üblicher Weise zwei Spannbacken auf, welche jeweils an den einander zugewandten Oberflächen mit einer Stützfläche versehen sind. Die Stützflächen weisen bevorzugt eine derartige Größe auf, daß beim Festspannen der Schraubenzwinge nicht etwa der Verputz oder das Mauerwerk, wogegen die Stützflächen anliegen, eingedrückt oder sonst wie beschädigt wird.

Es ist im Prinzip möglich, als Haspelträger lediglich einen Flansch oder Teller zu verwenden, welcher an der Schiene der Schraubenzwinge befestigt ist und drehbar die Haspel trägt. Gemäß einer weiteren Ausgestaltung der Erfindung ist aber der Haspelträger als Vertikalarm ausgebildet, in dessen mittlerem Bereich die Haspel angebracht ist. Dieser Vertikalarm liefert mit seinen Enden zwei um seine Länge voneinander getrennte Abstützungspunkte, welche Kräfte in das Mauerwerk einleiten, die sonst von der Schraubenzwinge aufgenommen werden müßten. Gemäß dieser Ausgestaltung ist die Schraubenzwinge bevorzugt am oberen Ende des Vertikalarmes angebracht; es kann aber auch von Vorteil sein, eine zweite Schraubenzwinge am unteren Ende des Armes anzuordnen. Diese beiden Schraubenzwingen können ihrerseits die genannten Abstützungspunkte bilden, wenn keine Vorkehrung getroffen ist, daß sich der Arm selbst unmittelbar auf dem Mauerwerk abzustützen vermag.

Die genannte Abstützung ist gemäß einer weiteren Ausgestaltung der Erfindung als Stützfläche ausgebildet, um zu verhindern, daß eine Beschädigung des Mauerwerks oder Verputzes stattfindet.

Um derartige Beschädigungen noch weiter zu vermeiden, ist gemäß einer weiteren Ausgestaltung der Erfindung mindestens eine der Stützflächen von Haspelträger und Spanneinrichtung von einem Polster aus nachgiebigem Material gebildet, etwa Weichkunststoff oder Polyäthylen; ein derartiges Polster schmiegt sich an Wandunebenheiten an und sorgt somit für einen noch zuverlässigeren Halt der Vorrichtung an der Türlaibung, verhindert aber gleichzeitig die Möglichkeit von Beschädigungen der Wand.

Es ist möglich, als Haspel eine mit zwei Flanschen versehene Wickeltrommel vorzusehen, auf welche das Heizungsrohr zur Bildung des eingangs genannten Ringes zunächst aufzuwickeln ist. Gemäß einer weiteren Ausgestaltung der Erfindung ist aber die Handhabung der Vorrichtung dahingehend noch weiter vereinfacht, daß der an der Außenseite der Vorrichtung liegende Außenflanschkörper auf dem übrigen Teil der Haspel derart abnehmbar befestigt ist, daß sich der aus Heizrohren gewickelte Ring unverändert und mühelos auf die Haspel aufsetzen läßt.

Gemäß einer weiteren Ausgestaltung der Erfindung ist der Trommelkörper der Haspel, der den genannten Ring trägt, aus einzelnen, in einer Kreiszylinderfläche liegenden Stäben gebildet, welche in den beiden Flanschkörpern der Haspel jeweils drehbar gelagert sind. Infolge der drehbaren Lagerung ist eine Relativdrehung zwischen Haspel und Ring möglich, so daß etwa bei ruckartigem, raschem Abziehen eines Rohrabschnitts von der Haspel sich diese gegebenenfalls noch weiter zu drehen vermag, während infolge der Steifheit des Rohres der Ring eher wieder zum Stillstand kommt, wenn am Rohr nicht mehr gezogen wird. Es wird somit ein unkontrolliertes Abwickeln vermieden, wie es auch in dem Fall eintreten könnte, wenn jemand gegen den Außenflansch der Haspel stößt. Im übrigen kann die drehbare Lagerung der Stäbe die Drehlagerung der Haspel ersetzen, so daß beim Abziehen des Rohrringes sich dieser dreht, während die Flansche der Haspel in Ruhe bleiben. Die lösbare Befestigung des Außenflanschkörpers kann auf einer Haspel-Mittelachse stattfinden. Gemäß einer weiteren Ausgestaltung der Erfindung ist eine Befestigungseinrichtung zur lösbaren Anbringung des Außenflansches jedoch jeweils an einem diesem benachbarten Ende der genannten Stäbe angebracht, wobei gemäß einer weiteren Ausgestaltung der Erfindung diese Befestigungseinrichtung als Schraubenspindel ausgebildet ist, welche eine Bohrung im Außenflanschkörper durchdringt und von außen her mittels einer Flügelmutter befestigt ist. Es ist zum Abnehmen des Außenflansches lediglich notwendig, die den Stäben entsprechende Anzahl von Muttern zu lösen und dann den Außenflansch einfach abzuziehen.

Zur Gewichts- und Kostenersparnis, aber auch zum Zweck der Sichtkontrolle des auf der Haspel aufgelegten Ringes, sind der Innen- und der Außenflansch jeweils von einer Anzahl sternartig angeordneter Leisten, und zwar insbesondere drei Leisten, gebildet. Diese Leisten tragen die Stäbe, welche ihrerseits den Ring tragen.

Um das Aufsetzen eines neuen Ringes noch weiter zu erleichtern, ist es zweckmäßig, eine Befestigungseinrichtung zu wählen, deren Teile unverlierbar sind. Ein Beispiel für eine derartige Befestigungseinrichtung ist ein Stift, dessen Außenende gelenkartig umkippbar ist und in umgekippter Stellung verrastbar ist. Gemäß einer weiteren Ausgestaltung der Erfindung ist es aber besonders von Vorteil, daß die Leisten Durchgangsbohrungen für die Schraubenspindeln der Stäbe aufweisen, wobei die Bohrungen durch eine Nut bei allen Stäben in jeweils der gleichen Umfangsrichtung zur Stabaußenseite hin offen sind. Die Flügelmuttern und die Schraubenspindeln sind derart ausgebildet, daß ein gänzliches Abdrehen der Flügelmuttern von der jeweiligen Schraubenspindel verhindert ist. Die Flügelmuttern sind somit unverlierbar.

Zum Lösen des Außenflanschkörpers ist es lediglich notwendig, die Flügelmuttern bis zum Anschlag aufzuschrauben, den Außenflanschkörper entgegen der obengenannten Umfangsrichtung zu verdrehen und dann abzunehmen. Der Zusammenbau findet in umgekehrter Reihenfolge statt.

Um die Spanneinrichtung bzw. die Spanneinrichtung zu entlasten, ist es gemäß einer weiteren Ausgestaltung der Erfindung von Vorteil, an der Unterseite des Flanschträgers eine Bodenstütze anzubringen, welche die in vertikaler Richtung auftretenden Kräfte in den Boden einleitet und das Festspannen des Flanschträgers erleichtert.

Gemäß einer weiteren Ausgestaltung der Erfindung ist die gesamte Vorrichtung von den an der benachbarten Maueroberfläche der Türlaibung anliegenden Stützflächen an gerechnet, bis zum hiervon abgelegenen Ende des Außenflansches nicht breiter als 40 cm, so daß bei der Anbringung der erfindungsgemäßen Vorrichtung in einer üblichen Türöffnung hinlänglich unbehinderter Raum verbleibt, durch welchen Arbeiter passieren können, so daß durch die Anbringung der Vorrichtung keinerlei Arbeiten gestört werden.

Der Gegenstand der Erfindung ist anhand der beigefügten, schematischen Zeichnung beispielsweise noch näher erläutert; es zeigt

Fig. 1 eine erfindungsgemäße Vorrichtung, die an einer Türlaibung angebracht ist, im Schrägbild,

Fig. 2 die Einzelheit II in Fig. 1,

Fig. 3 einen Schnitt längs Linie III-III in Fig. 1, und

Fig. 4 eine weitere Ausführungsform der erfindungsgemäßen Vorrichtung, in der Seitenansicht.

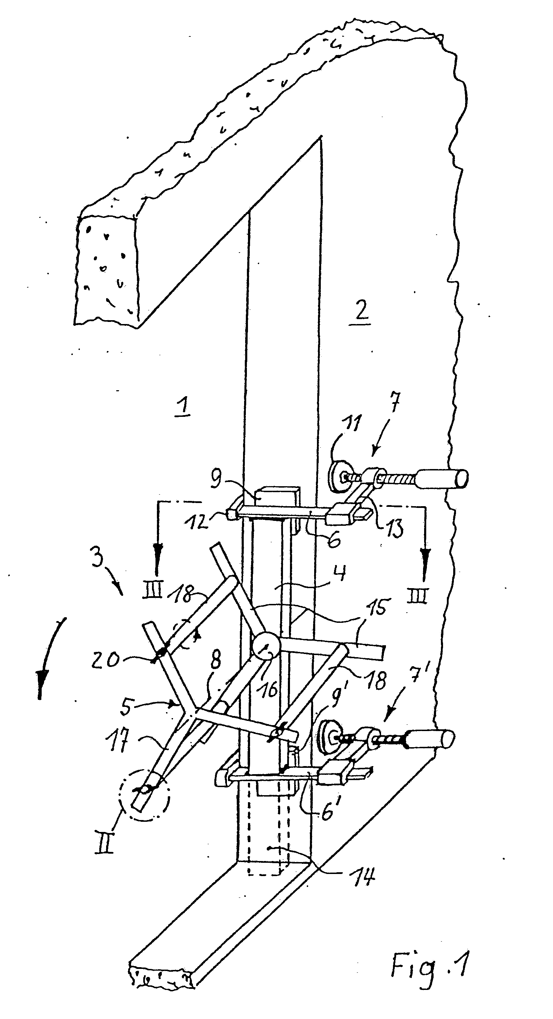

In Fig. 1 ist abgebrochen der Teil einer vertikalen Gebäudemauer 2 gezeigt, in welcher eine Öffnung 1 ausgespart ist, welche für den späteren Einbau einer Tür oder eines Fensters vorgesehen ist. Es muß sich in diesem Fall nicht um eine allseits durch Mauerwerk begrenzte Öffnung handeln, sondern zur Anbringung der nachfolgend noch beschriebenen Vorrichtung genügt eine vertikale Mauerleiste, deren Breite jene üblicher Gebäudemauern nicht über- oder untersteigt und deren Tiefe die sichere Anbringung der genannten Vorrichtung erlaubt.

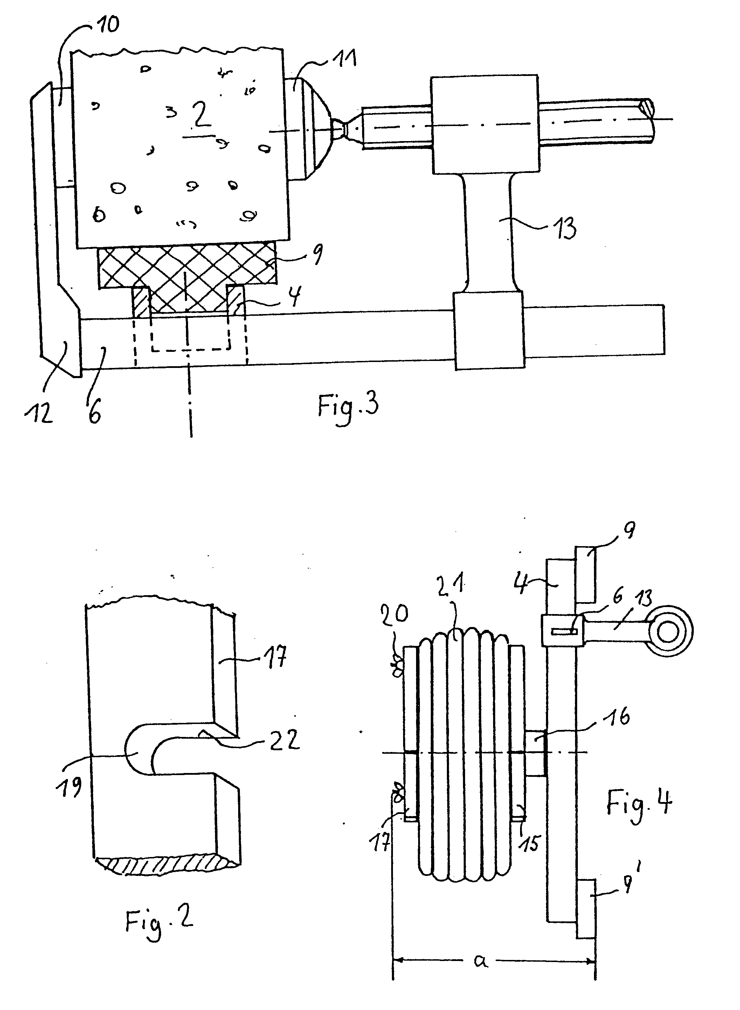

An der vertikalen Begrenzungswand der Türöffnung 1 ist eine Vorrichtung 3 befestigt, welche von einem sich vertikal erstreckenden, stabartigen Haspelträger 4 gebildet ist, der gegen die Stoßfläche der Wand 2 innerhalb der Türöffnung 1 anliegt. Dieser Haspelträger 4 trägt etwa in seiner Mitte drehbar eine vorzugsweise fliegend gelagerte Haspel 5, welche zur Aufnahme eines Heizungsrohrringes eingerichtet ist, wie dies etwa aus Fig. 4 ersichtlich ist. Will man die fliegende Lagerung vermeiden, so kann man vom oberen Ende des Trägers 4 eine Traverse abragen lassen, die sich parallel zur Haspelachse erstreckt und an ihrem freien Ende einen Arm um eine waagerechte zur Hspelachse lotrechte Achse schwenkbar trägt und mit seinem feien Ende die Haspel zum zweitenmal lagert.

Der Haspelträger 4 ist, wie auch aus Fig. 3 ersichtlich, aus einem U-Stahlprofiltträger gebildet, an dessen Enden jeweils die Schiene 6, 6' einer oberen bzw. unteren Schraubenzwinge 7, 7' derart angeschweißt ist, daß sie sich jeweils horiziontal und in einer Radialebene der Achse 8 für die Haspel 7 erstreckt.

Der Haspelträger 4 weist an seinem oberen und unteren Ende jeweils ein Stützpolster 9, 9' aus verhältnismäßig weichem Material, z. B. Holz oder Kunststoff, auf, und die Enden des Haspelträgers 4 leiten über diese Stützpolster 9 etwa auftretende Kippkräfte in die Mauer 2 ein, ohne deren Oberfläche zu beschädigen.

Jede der Schraubenzwingen 7, 7' weist in üblicher Weise eine feste Spannbacke 12 und eine bewegliche Spannbacke 13 auf, die sich horizontal und parallel zur genannten Achse 8 erstrecken. Die auf der Schiene 6, 6' verschieblich bewegliche Spannbacke 13 weist in ihrem Ende eine sich parallel zur Schiene 6, 6' erstreckende Schraubenspindel auf, an deren der Wand 2 zugewandtem Ende jeweils ein weiteres Stützpolster 11 ausgebildet ist. Diesem gegenüberliegend und zugewandt ist auch an der festen Spannbacke 12 ein Stützpolster 10 angeordnet.

Zwischen beiden Stützpolstern, die ebenfalls aus weichem Material gebildet sind und/oder eine ausreichend große Auflagefläche aufweisen, kann die Wand 2 derart fest umgriffen und eingespannt werden, daß alle während des Betriebes in diese Vorrichtung eingeleiteten Kräfte in die Wand weitergeleitet werden. Die Anbringung der Schraubenzwinge 7 an der Wand 2 ist aus Fig. 3 noch näher ersichtlich.

Der Haspelträger 4 kann an seiner Unterseite um einen in Fig. 1 nur gestrichelt dargestellten Fuß 14 verlängert sein, welcher auf dem Boden aufsitzt und somit bewirkt, daß vertikale Kräfte unmittelbar über den Fuß 14 in den Boden eingeleitet werden, so daß die Möglichkeit der Beschädigung der Wand 2 durch die Stützpolster 9, 10, 11 noch weiter verringert wird.

Die Haspel 5 weist einen inneren Flanschkörper auf, der aus drei einen symmetrischen Stern bildenden Leisten 15 gebildet ist. Im gemeinsamen Schnittpunkt sind die Leisten 15 mittels eines Lagers 16 drehbar, aber axial im wesentlichen unverschieblich am Haspelträger 4 angebracht.

Drei weitere Leisten 17 bilden einen äußeren Flanschkörper, der ähnlich dem inneren Flanschkörper ausgebildet ist.

Jeweils zwei einander axial gegenüberliegende Leisten 15, 17 sind etwa ein Drittel ihrer Länge von ihrem jeweiligen Ende entfernt miteinander durch einen Stab 18 verbunden. Jeder dieser Stäbe 18 ist an der zugehörigen Leiste 15 axial unverschieblich befestigt und weist an seinem gegenüberliegenden Ende eine Schraubenspindel auf, welche eine Bohrung 19 (Fig. 2) in der zugehörigen Leiste 17 durchdringt und mittels einer Flügelmutter 20 mit dieser Leiste 17 lösbar verbunden ist. Die Flügelmutter ist nach ihrem Lockern durch eine entsprechende Vorkehrung am Ende der Schraubenspindel gehalten, so daß sie unverlierbar ist.

Der ausgezogene Pfeil in Fig. 1 zeigt die Drehrichtung der Haspel 5 an. Es können aber auch zusätzlich oder alternativ die Stäbe 18 jeweils drehbar gelagert sein. Deren Drehrichtung ist in Fig. 1 durch den gestrichelten Pfeil gezeigt. Im Falle drehbarer Stäbe 18 kann gegebenenfalls die Lagerung 16 durch eine feste Anbringung der Leisten 15 am Haspelträger 4 ersetzt werden.

Die Einzelheit II in Fig. 1 ist in Fig. 2 im vergrößertem Maßstab dargestellt.

Gezeigt ist ein Ausschnitt aus einer Leiste 17 des Haspel-Außenflansches. Der zugehörige Stab 18, dessen Schraubenspindel und die Flügelmutter 20 sind in Fig. 2 nicht dargestellt.

Die Leiste 17 weist eine Bohrung 19 auf, welche durch eine Nut 22, deren Breite dem Durchmesser der Bohrung 19 gleich ist, zur Außenseite der Leiste 17 hin verlängert ist. In gleicher Weise sind alle drei Leisten 17 des in Fig. 1 gezeigten Außenflansches ausgebildet. Es ist nun ersichtlich, daß es zum Abnehmen des Außenflansches nur erforderlich ist, die drei Flügelmuttern 20 zu lockern und dann den Außenflansch durch eine Drehbewegung in Richtung des in Fig. 1 ausgezogenen gezeichneten Pfeiles gegenüber dem Rest der Haspel 5 zu verdrehen. Die Schraubenspindeln passieren dann die Nut 22 der jeweiligen Leiste 17 bis zu deren vollständiger Freigabe. Der Heizrohrwickel kann nun ohne weiteres von außen her auf die Stäbe 18 aufgeschoben oder, falls erforderlich, von diesen abgenommen werden. Vor der Inbetriebnahme der Vorrichtung muß der Außenflansch wieder aufgesetzt werden; die hierfür erforderlichen Vorgänge laufen in der umgekehrten Reihenfolge ab wie die oben beschriebenen Vorgänge zur Abnahme des Außenflansches.

In Fig. 3 ist der Schnitt III-III der Fig. 1 in vergrößertem Maßstab gezeigt; man erkennt (gestrichelt) die Profilform des den Haspelträger 4 bildenden Profilstabes.

Das Stützpolster 9 kann etwa durch Festklemmen und Verkleben an diesem Profilstab befestigt sein.

Bei der in Fig. 1 bis 3 gezeigten Vorrichtung ist die Verwendung der gezeigten Stützpolster 9, 9′ nicht zwingend erforderlich, denn es ist möglich, mittels der beiden Schraubenzwingen 7, 7′ den Haspelträger 4 derart anzubringen, daß er die benachbarte Oberfläche der Mauer 2 nicht berührt und somit auch nicht beschädigen kann. Allerdings erlaubt die Verwendung der Stützpolster 9, 9′, daß die Vorrichtung an die angrenzende Begrenzungswand der Türöffnung 1 so nahe wie nur irgend möglich angenähert werden kann, um den Raumbedarf für die gezeigte Vorrichtung so klein wie möglich zu halten und in der Türöffnung 1 einen genügend breiten Durchgang zwischen dem Außenflansch der Haspel 5 und der gegenüberliegenden Begrenzungswand der Türöffnung 1 freizulassen. Auch wird die Anbringung erleichtert.

In Fig. 4 ist eine andere Ausführungsform der erfindungsgemäßen Vorrichtung gezeigt, mit nur einer Schraubenzwinge 7. Diese befindet sich etwa an der gleichen Stelle wie die obere Schraubenzwinge 7 der Ausführungsform nach Fig. 1; der den Haspelträger 4 bildende Profilstab ist aber über die Schiene 6 der Schraubenzwinge 7 nach oben hinaus verlängert. Die beiden freien Enden des genannten Profilstabes 4 weisen Stützpolster 9, 9′ auf, wie sie im Zusammenhang mit Fig. 1 bereits beschrieben sind. Die Anbringung der Haspel 5 am Haspelträger 4 erfolgt so, wie es bereits im Zusammenhang mit Fig. 1 beschrieben ist. Bei dieser Ausführung muß die Schraubenzwinge stärker ausgebildet sein.

In Fig. 4 ist ein zu einem Ring 21 aufgewickelter Heizrohrstrang gezeigt, der auf der Haspel 5 aufgesetzt ist. Ferner ist in Fig. 4 als Strecke a die Breite bezeichnet, welche für den Raumbedarf bei der Anbringung der Vorrichtung bestimmend ist. Dieses Maß a übersteigt 40 cm nicht und liegt bevorzugt in der Größenordnung von 30 cm.

## Patentansprüche

1. Vorrichtung zum Aufnehmen eines zum Ring aufgewickelten Heizrohrstranges für eine Fußbodenheizung während der Verlegung desselben, mit einer Haspel (5) zur Aufnahme des Rings und einem die Haspel bzw. den Ring drehbar tragenden Haspelträger (4), dadurch gekennzeichnet, daß der Haspelträger (4) an einer Seite, bzw. bei fliegend gelagerter Haspel (5) an der von der Haspel abgewandten Seite eine ein Festspannen des Haspelträgers an einer vertikalen Türlaibung (2) oder dergleichen erlaubende Spannvorrichtung (7, 7′) trägt und daß — um den Durchgang durch die Türöffnung nicht wesentlich zu behindern — der Abstand (a) vom freien Ende der Haspel (5) bis zur Stützfläche des Haspelträgers (4), in Richtung der Achse (8) der Haspel (5) gemessen, etwa 40 cm nicht übersteigt.

2. Vorrichtung nach Anspruch 1, dadurch gekennzeichnet, daß die Spannvorrichtung als Schraubenzwinge (7, 7′) ausgebildet ist, mit einer am Haspelträger (4) gelenkig oder — wie das bevorzugt wird — fest angebrachten Schiene (6), an deren einem Ende eine feste (12) und an deren anderem Ende eine verschiebliche (13) Spannbacke angebracht ist, wobei an den beiden freien, vom Haspelträger (4) abgewandten Enden der Spannbacken (12, 13) einander zugewandt jeweils eine Stützfläche (10, 11) ausgebildet ist.

3. Vorrichtung nach Anspruch 2, dadurch gekennzeichnet, daß der Haspelträger (4) als Vertikalarm (4) ausgebildet ist, in dessen mittleren Bereich die Haspel (5) angebracht ist, und daß die Spannvorrichtung (7) im Bereich des oberen Endes des Profilstabs angebracht ist.

4. Vorrichtung nach Anspruch 3, dadurch gekennzeichnet, daß eine zweite Spannvorrichtung (7′) auch im Bereich des unteren Endes des Vertikalarms (4) angebracht ist.

5. Vorrichtung nach einem der Ansprüche 1 bis 4, dadurch gekennzeichnet, daß an der der Haspel (5) abgewandten Seite des Haspelträgers (4) mindestens eine Stützfläche (9, 9′) ausgebildet ist.

6. Vorrichtung nach einem der Ansprüche 2 bis 5, dadurch gekennzeichnet, daß am Haspelträger (4) und/oder der Spannvorrichtung (7, 7′) mindestens eine der Stützflächen von einem Polster (9, 9′, 10, 11) aus nachgiebigem Material gebildet ist.

7. Vorrichtung nach einem der Ansprüche 1 bis 6, dadurch gekennzeichnet, daß die Haspel (5) einen am Haspelträger (4) gelagerten Innenflanschkörper (Leisten 15), einen hieran befestigten Wickelträger (Stäbe 18) und an dessen Außenseite einen abnehmbar befestigten Außenflanschkörper (Leisten 17) aufweist.

8. Vorrichtung nach Anspruch 7, dadurch gekennzeichnet, daß der Wickelträger von mehreren Stäben (18) gebildet ist, welche längs mehrerer Erzeugender eines zur Haspelachse (8) koaxialen Kreiszylinders angeordnet und bevorzugt drehbar an den Flanschkörpern (Leisten 15, 17) befestigt sind.

9. Vorrichtung nach Anspruch 8, dadurch gekennzeichnet, daß an den dem Außenflanschkörper (Leisten 17) benachbarten Enden der Stäbe (18) jeweils eine Befestigungseinrichtung (20) zur lösbaren Anbringung des Außenflansches angebracht ist.

10. Vorrichtung nach Anspruch 9, dadurch gekennzeichnet, daß die Befestigungseinrichtung als Schraubenspindel ausgebildet ist, auf welcher insbesondere der jeweilige Stab (18) drehbar gelagert ist, welche den Außenflanschkörper (Stäbe 17) durchdringt und welche am Außenende eine Flügelmutter (20) trägt.

11. Vorrichtung nach einem der Ansprüche 8 bis 10, dadurch gekennzeichnet, daß die Flanschkörper von einer Anzahl sternartig angeordneter Leisten (15, 17), insbesondere drei Leisten, gebildet sind, welche die Stäbe (18) tragen.

12. Vorrichtung nach einem der Ansprüche 10 oder 11, dadurch gekennzeichnet, daß die den Außenflanschkörper bildenden Leisten (17) Durchgangsbohrungen (19) für die Schraubenspindeln der Stäbe (18) aufweisen, daß die Bohrungen durch eine Nut (22) bei allen Stäben in jeweils der gleichen Umfangsrichtung zur Stabaußenseite hin offen sind, und daß die Enden der Spindeln Ausbildungen zur unverlierbaren Anbringung der jeweiligen Flügelmutter tragen.

13. Vorrichtung nach einem der Ansprüche 1 bis 12, dadurch gekennzeichnet, daß an der Unterseite des Haspelträgers (4) eine Bodenstütze (14) angebracht ist.

14. Vorrichtung nach einem der Ansprüche 5 bis 13, dadurch gekennzeichnet, daß der Abstand (a) vom freien Ende der Haspel (5) bis zur Stützfläche des Haspelträgers (4), in Richtung der Achse (8) der Haspel (5) gemessen, etwa 30 cm beträgt.

## Claims

1. An apparatus for receiving a heating pipeline for underfloor heating, wound into a ring, during the laying thereof, having a reel (5) to receive the ring and a reel carrier (4) rotatably carrying the reel and the ring, characterised in that the reel carrier (4) carries a clamping device (7, 7'), enabling the reel carrier to be clamped to a vertical inner face of a door opening (2) or the like, at one side or, in the case of a reel (5) mounted overhung, at the side remote from the reel, and that the distance (a) from the free end of the reel (5) to the supporting surface of the reel carrier (4), measured in the direction of the axis (8) of the reel (5), does not exceed about 40 cm, so as not to substantially hinder passage through the door opening.

2. An apparatus according to claim 1, characterised in that the clamping device is constructed in the form of a screw clamp (7, 7') having a rail (6) which is articulately or — preferably — rigidly mounted in the reel carrier (4) and on one end of which a rigid clamping jaw (12) is mounted and on the other end of which a displaceable clamping jaw (13) is mounted, a supporting surface (10, 11) being constructed at each end of the two free ends of the clamping jaws (12, 13) remote from the reel carrier (4) with the two supporting faces facing one another.

3. An apparatus according to claim 2, characterised in that the reel carrier (4) is constructed in the form of a vertical arm (4) in the middle region of which the reel (5) is mounted, and that the clamping device (7) is mounted in the region of the upper end of the profiled bar.

4. An apparatus according to claim 3, characterised in that a second clamping device (7') is also mounted in the region of the lower end of the vertical arm (4).

5. An apparatus according to one of the claims 1 to 4, characterised in that at least one supporting surface (9, 9') is constructed on the side of the reel carrier (4) remote from the reel (5).

6. An apparatus according to one of the claims 2 to 5, characterised in that least one of the supporting surfaces on the reel carrier (4) and/or the clamping device (7, 7') is formed from a cushion (9, 9', 10, 11) of flexible material.

7. An apparatus according to one of the claims 1 to 6, characterised in that the reel (5) comprises an inner flange member (bars 15) mounted on the reel carrier (4), a roll carrier (rods 18) secured thereto and a removably secured outer flange member (bars 17) at its outside.

8. An apparatus according to claim 7, characterised in that the roll carrier is formed from a plurality of rods (18) which are disposed along a plurality of generatrices of a circular cylinder coaxial with the reel axis (8) and are preferably rotatably mounted on the flange members (bars 15, 17).

9. An apparatus according to claim 8, characterised in that an attachment device (20) for the detachable mounting of the outer flange is provided at the end of each of the rods (18) adjacent to outer flange member (bars 17).

10. An apparatus according to claim 9, characterised in that the attachment device is constructed in the form of a screw spindle on which the particular rod (18) is mounted for rotation in particular, and which penetrates through the outer flange member (bars 17) and carries a wing nut (20) at the outer end.

11. An apparatus according to one of the claims 8 to 10, characterised in that the flange members are formed from a plurality of bars (15, 17), particularly three bars, which are disposed in the form of a star and which carry the rods (18).

12. An apparatus according to one of the claims 10 or 11, characterised in that the bars (17) forming the outer flange member comprise through bores (19) for the screw spindles of the rods (18), that the bores are open towards the outside of the rod in the same circumferential direction in all the rods, through a groove (22), and that the ends of the spindles comprise for-

mations for the captive mounting of the particular wing nuts.

13. An apparatus according to one of the claims 1 to 12, characterised in that a bottom support (14) is provided at the underside of the reel carrier (4).

14. An apparatus according to one of the claims 5 to 13, characterised in that the distance (a) from the free end of the reel (5) to the supporting surface of the reel carrier (4), measured in the direction of the axis (8) of the reel (5), amounts to about 30 cm.

**Revendications**

1. Dispositif de réception d'un tuyau destiné au chauffage par le sol, formant un enroulement, pendant la pose de ce dernier, comprenant une bobine (5) destinée à la réception de l'enroulement et un support de bobine (4) supportant de façon rotative la bobine ou l'enroulement, caractérisé en ce que le support de bobine (4) supporte sur un côté, ou lorsqu'il s'agit d'une bobine (5) montée en porte-à-faux, sur le côté qui est à l'opposé de la bobine, un dispositif de serrage (7, 7') autorisant le serrage du support de bobine sur un dormant vertical (2) d'une porte ou analogue, et en ce que — pour ne pas gêner sensiblement le passage par l'ouverture de la porte — la distance (a) entre l'extrémité libre de la bobine (5) et la surface d'appui du support de bobine (4), mesurée en direction de l'axe (8) de la bobine (5), ne dépasse pas sensiblement 40 cm.

2. Dispositif selon la revendication 1, caractérisé en ce que le dispositif de serrage est constitué sous forme de serre-joints (7, 7'), comprenant une barre (6) montée de façon articulée ou — de préférence — de façon fixe sur le support de bobine (4), une mâchoire de serrage fixe (12) montée à une extrémité et une mâchoire de serrage mobile (13) montée à l'autre extrémité, une surface d'appui (10, 11) étant respectivement constituée aux deux extrémités libres des mâchoires de serrage (12, 13) qui sont à l'opposé du support de bobine (4) et qui sont tournées l'une vers l'autre.

3. Dispositif selon la revendication 2, caractérisé en ce que le support de bobine (4) est constitué sous forme d'un bras vertical (4) dans la partie centrale duquel est montée la bobine (5), et en ce que le dispositif de serrage est disposé dans la région de l'extrémité supérieure de la barre profilée.

4. Dispositif selon la revendication 3, caractérisé en ce qu'un second dispositif de serrage (7') est également monté dans la région de l'extrémité inférieure du bras vertical (4).

5. Dispositif selon l'une quelconque des revendications 1 à 4, caractérisé en ce qu'au moins une surface de support (9, 9') est constituée sur le côté du support de bobine (4) qui est à l'opposé de la bobine (5).

6. Dispositif selon l'une quelconque des revendications 2 à 5, caractérisé en ce qu'au moins l'une des surfaces de support du support de bobine (4) et/ou du dispositif de serrage (7, 7') est constituée par un coussin (9, 9', 10, 11) en un matériau flexible.

7. Dispositif selon l'une quelconque des revendications 1 à 6, caractérisé en ce que la bobine (5) comprend un corps de joue intérieur (baguettes 15) monté sur le support de bobine (4), un support de bobine (barres 18) fixé sur ces dernières et un corps de bobine extérieur (baguettes 17) fixé de façon amovible sur leur côté extérieur.

8. Dispositif selon la revendication 7, caractérisé en ce que le support de bobine est constitué par plusieurs barres (18) qui sont disposées le long de plusieurs génératrices d'un cylindre circulaire coaxial à l'axe (8) de la bobine et sont fixées de préférence de façon rotative sur les corps de joue (baguettes 15, 17).

9. Dispositif selon la revendication 8, caractérisé en ce qu'aux extrémités des barres (18) qui sont voisines du corps de joue extérieur (baguettes 17) sont respectivement disposés des dispositifs de fixation (20) en vue de la mise en place amovible de la joue extérieure.

10. Dispositif selon la revendication 9, caractérisé en ce que le dispositif de fixation est constitué sous forme d'une broche filetée sur laquelle est en particulier montée de façon rotative la barre correspondante (18) qui traverse le corps de joue extérieur (barres 17) et qui supporte à son extrémité extérieure un écrou à oreilles (20).

11. Dispositif selon l'une quelconque des revendications 8 à 10, caractérisé en ce que les corps de joue sont constitués par un certain nombre de baguettes (15, 17) disposées en étoile, en particulier au nombre de trois, qui supportent les barres (18).

12. Dispositif selon la revendication 10 ou 11, caractérisé en ce que les baguettes (17) formant le corps de joue extérieur présente des alésages traversants (19) pour les broches filetées des barres (18), en ce que les alésages sont ouverts en direction du côté extérieur des barres par une rainure (22) orientée dans la même direction périphérique dans toutes les barres, et en ce que les extrémités des broches comportent des formations empêchant la perte des écrous à oreilles correspondants.

13. Dispositif selon l'une quelconque des revendications 1 à 12, caractérisé en ce qu'un appui de sol (14) est disposé sur le côté inférieur du support de bobine (4).

14. Dispositif selon l'une quelconque des revendications 1 à 13, caractérisé en ce que la distance (a) entre l'extrémité libre de la bobine (5) et la surface d'appui du support de bobine (4), mesurée en direction de l'axe (8) de la bobine (5), est d'environ 30 cm.

Fig. 1

0 087 500

9

Fig. 3

Fig. 2

Fig. 4